Europäisches Patentamt

European Patent Office

Office européen des brevets

(11) Publication number: **0 282 656**
**A2**

# EUROPEAN PATENT APPLICATION

(21) Application number: **87202602.6**

(22) Date of filing: **22.12.87**

(51) Int. Cl.⁴: **B60N 1/00**

(30) Priority: **17.03.87 IT 6720387**

(43) Date of publication of application:
**21.09.88 Bulletin 88/38**

(84) Designated Contracting States:
**BE DE ES FR GB NL**

(71) Applicant: **F.I.S.A. - Fabbrica Italiana Sedili**
**Autoferroviari S.p.A.**
**Zona Industriale**
**I-33010 Osoppo Udine(IT)**

(72) Inventor: **De Simon, Ubaldo**
**Via Fortunato 1**
**I-33010 Osoppo Udine(IT)**

(74) Representative: **Robba, Eugenio**
**Studio "INTERPATENT" via Caboto 35**
**I-10129 Turin(IT)**

(54) **Sprung and cushioned base for seats of truck vehicles and the like.**

(57) The sprung base for seats of truck vehicles is substantially constituted by a fixed plate (3) firmly secured to the floor (5), and by a movable plate (7) connected to the fixed plate (3) by a scissor device (11).

The upper plate (7) is constituted by a fixed frame (27), by the connection arm (17) of the guideways (14) and by a counter frame (23).

A series of helical springs (19) is provided between said connection arm (17) of the guideways (14) and said counter frame (23).

According to the degree of pre-loading of said springs (19), springing of the seat (1) is more or less rigid.

Provided obliquely of the seat is a shock absorber (37) secured with one end to the fixed plate at (39) and with the other end to the movable plate at (41), thus providing for cushioning of the springing.

Said cushioning may be "soft" or "hard" depending on the angular position into which the piston rod (43) of the shock absorber (37) is brought relative to the body thereof.

FIG. 1

## "Sprung and cushioned base for seats of truck vehicles and the like"

The present invention relates to a base for seats of truck vehicles and the like and more particularly to a sprung and cushioned support for retaining said seats.

It is known that at present the bases for seats of truck vehicles and the like are constituted substantially by a lower base plate secured to the base of the vehicle and an upper base plate to which the padded seat bottom is secured. Said two plates are generally connected to each other by a scissor device pivotally connected, for example, at the rear end of the two plates and slidable on guideways at the front portion, thus permitting an adjustment in height of the seat support.

Springing of the seat is generally obtained by suitably arranged elastic means; typical is the solution of a conical helical spring placed in the centre of the seat below the bottom thereof and adjusted in tension by various contrivances to impart greater or less elasticity or springing to the seat.

Said devices for adjustment of the tension are various and of different conception: generally, however, they act in the required manner on said central spring to pre-tension or pre-load it, giving it greater or less elasticity according to said pre-loading.

A typical example of a seat provided with a base of this type is that described in the Patent for Industrial Invention No. 990,996 in the name of BREMSHEY AG, filed in Italy on July 6, 1973 and issued on July 10, 1975.

Said systems, as mentioned above, generally provide said seat with the desired degree of springing, but in addition to the fact that often said adjustment is complicated and not always within the capacity of the medium user (such as bus passengers), do not have any cushioning effect on said springing, which sometimes may be a nuisance, especially when the springing is relatively marked.

It is the object of the present invention to eliminate said disadvantages by providing a base for seats of truck vehicles and the like, which in addition to the adjustment of the springing will also ensure controlled cushioning thereof, apart, of course, from the possibility of locking the seat and making it rigid.

Another object of the present invention is to provide the present base with a means that will considerably contribute to absorbing the vibrations which are transmitted through the lower base plate to the upper portion of the seat.

The present base for seats is substantially constituted by a lower base plate secured to the base of the vehicle, and an upper base plate to which the bottom seat plate of the vehicle is secured, said upper and lower base plates being connected to each other by a scissor device pivotally connected at the rear portion of the two plates and slidable on guideways at the front portion, thus permitting an adjustment in height of the support, characterized in that at the front portion, in opposition to the horizontal movement of the connection arm of the guideways, there are provided helical springs of harmonic steel for accumulating energy and helping to cushion the vibrations that are transmitted to the system through the lower plate to restrain the movement of the upper plate, said springs being loadable to the desired intensity by means of an appropriate handwheel acting on the plane of counter fixing of the springs through the movement of an inclined plane, firmly secured to the frame, on another inclined plane firmly secured to said counter frame; and in that said base is provided with an appropriate two-speed shock absorber secured obliquely relative to the base with one end secured to the fixed base of the seat and with the other end secured to the movable frame of said seat; said shock absorber being capable of being moved into a "soft" or a "hard" position by means of an appropriate handwheel acting from the outside of the seat on the piston rod of said shock absorber; and in that said base is adapted to be converted into a rigid base by means of an appropriate lever for locking the vertical movement of the seat.

A further fundamental characteristic of the present invention consists in that the device with inclined planes for loading the springs is substantially constituted by a cone-shaped element movable transversely relative to the upper frame of the seat, with the inclined plane directed towards the inclined plane of another cone-shaped element firmly secured to the movable counter frame of said seat; the relative movement of said two cone-shaped elements, i.e. the relative transverse movement of the two inclined planes contacting each other, producing shifting of the movable counter frame in a perpendicular direction relative to the connection arm of the guideways and consequently pre-loading of the helical springs at the desired intensity, producing the desired degree of springing.

A further fundamental characteristic of the present invention consists in that the device for adjustment of the position of the shock absorber into the "soft" or "hard" position substantially is a handwheel which through a rod extending up to the piston rod of the shock absorber adjusts the relative position thereof with respect to the cylinder, placing said piston rod in one or the other position.

It is obvious that according to a mechanical equivalent the helical springs for pre-loading the movable plate of the seat may be placed at the rear instead of in the front, without thereby changing in any way the inventive concept of the invention.

In the described and illustrated example said helical springs are provided in a number of three, but it is clear that said number is not at all binding, the number of the springs being a function of their functional and dimensional proportioning relative to the seat.

The invention will now be described in detail with partaicular reference to the accompanying drawings provided by way of a non-limitative example of one embodiment of the invention, in which:

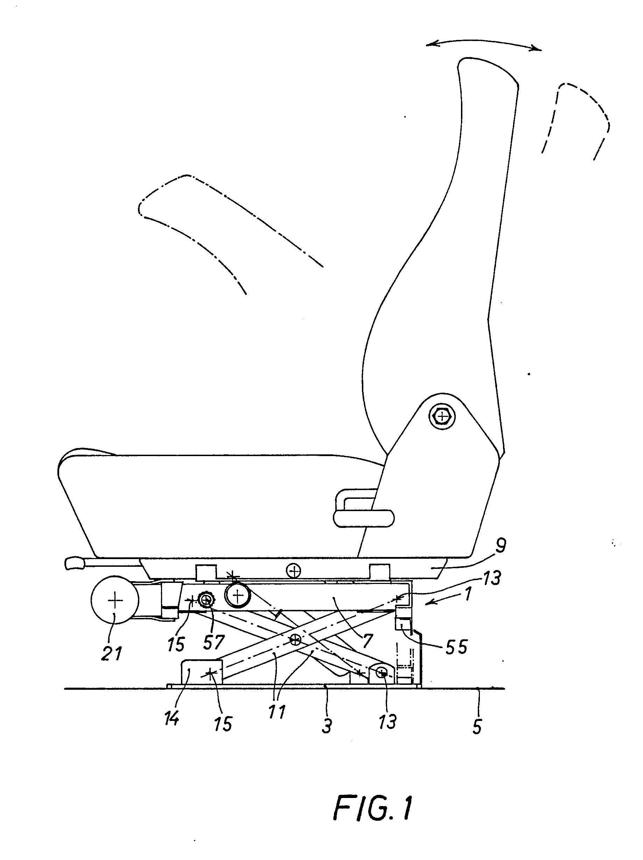

Fig. 1 is a side elevational view of a seat for truck vehicles supported on a base according to the invention;

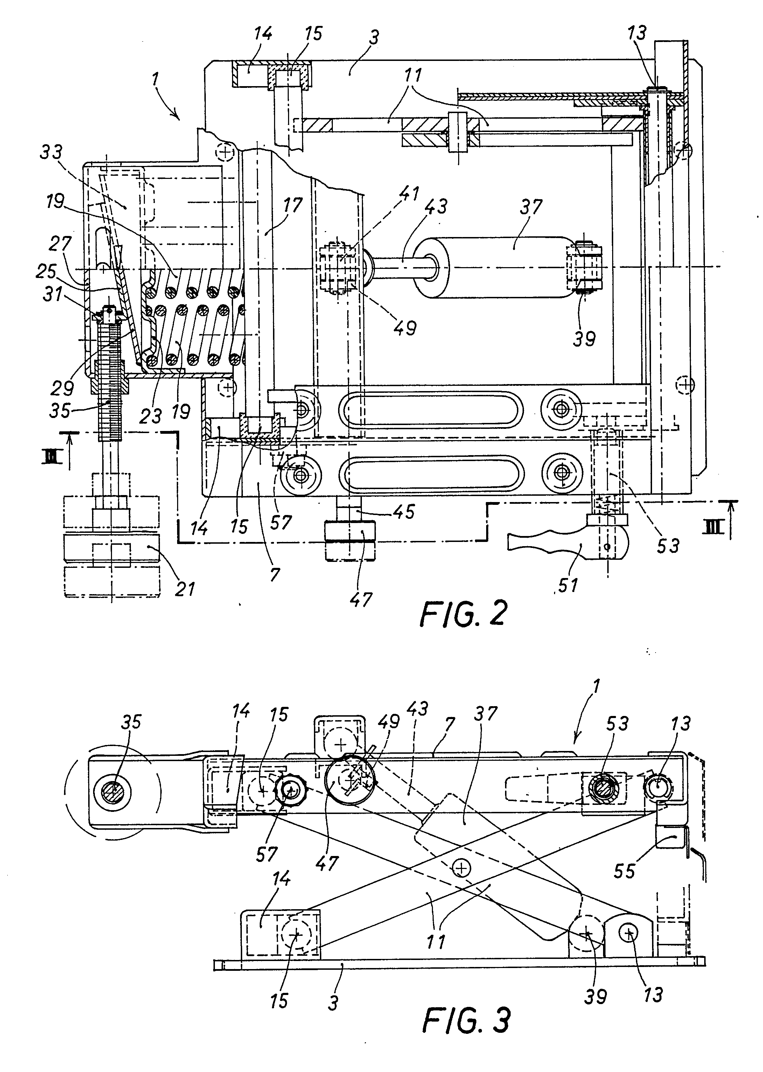

Fig. 2 is a top view, partly in section, of the present base;

Fig. 3 is a section of Fig. 2, taken along the line III-III.

As will be evident from the Figures, the present base or support for retaining the seat 1 is substantially constituted by a lower base plate 3, which is secured to the base 5 of the vehicle, and an upper base plate 7 to which the bottom seat plate 9 of the seat 1 is secured.

Said two plates 3 and 7 are connected to each other by a scissor device 11 which is pivotally mounted in the rear portion of the two plates at 13 and is slidable on guideways 14 in the front portion at 15, thus permitting adjustment in height of the support.

In the front portion in opposition to the horizontal movement of the connection arm 17 of the guideways 14 there are placed three helical springs 19 of harmonic steel of square or round cross section for accumulating energy and helping to cushion the vibrations which are transmitted to the system through the lower plate 3, restraining the movement of the upper guideway.

These three springs can be pre-loaded as a function of the weight of the operator at the desired intensity by means of an appropriate handwheel 21 acting on the plane of counter fixing 23 of the springs 19 through the movement of an inclined plane 25, firmly secured to the frame 27, on another inclined plane 29 firmly secured to said counter frame 23.

More particularly, the device for pre-loading the springs 19 is substantially constituted by a cone-shaped element 31 slidable transversely relative to the upper fixed frame 27 of the seat, with the inclined plane 25 directed towards the inclined plane 29 of another cone-shaped element 33 firmly secured to the upper movable counter frame 23 of the seat, the relative movement of said two cone-shaped elements 31, 33 being produced by the rotation of a threaded shaft 35 controlled by the above-mentioned handwheel 21.

To restrain the return of the upper plate of the seat and consequently reduce the width and frequency of the vibrations on the seat, produced obviously by the springs 19, the present base is provided with an appropriate shock absorber 37 of the two-speed type, fixed obliquely relative to the base, with one end secured to the fixed base of the seat at 39 and the other end secured to the movable frame of said seat at 41.

As mentioned above, said shock absorber can be adjusted into two positions, a "soft" and a "hard" position, corresponding to the two speeds of movement referred to above.

Said adjustment of the shock absorber 37 is obtained by a rotation of the piston rod 43, exactly determined by the manufacturer of the shock absorber, relative to the housing. In the present base said rotation of the piston rod 43 of the shock absorber is obtained by the shifting action of a transverse bar 45, projecting outwardly from the base, by means of a knob or handwheel 47.

Said bar 45 acts on the piston rod 43 at 49.

Further, the base is provided with a handle 51 which through a pin 53 permits to lock the vertical movement of the seat and thus to convert the base from a sprung base to a rigid one, when required.

Further, the upper plate has different positions to fix the guideways of the seat relative to the steering-wheel while the lower plate has different holes to permit various fixings on the bottom plate of the cab of the vehicle.

Arranged on the upper plate of the base are two rubber pads 55 which limit the downward movement and are of soft rubber to avoid a hard jerk in case of approach to the lower base.

The upward movement is further limited by the insertion of an appropriate screw 57 in the vicinity of the plastic bearing of the upper right-hand guideway.

## Claims

1. Base for seats of truck vehicles and the like, substantially constituted by a lower base plate (3) secured to the base (5) of the vehicle, and an upper base plate (7) to which the bottom seat plate (9) of the vehicle is secured, said upper and lower base plates being connected to each other by a scissor device (11) pivotally connected at the rear portion of the two plates at (13) and slidable on guideways (14) at the front portion at (15), thus permitting an adjustment in height of the support, characterized in that at the front portion, in opposition to the horizontal movement of the connection arm (17) of the guideways (14), there are provided helical springs (19) of harmonic steel for accumulating energy and helping to cushion the vibrations that are transmitted to the system through the lower plate (3) to restrain the movement of the upper plate, said springs being loadable to the desired intensity by means of an appropriate handwheel (21) acting on the plane of counter fixing (23) of the springs (19) through the movement of an inclined plane (25), firmly secured to the frame (27), on another inclined plane (29) firmly secured to said counter frame (23); and in that said base is provided with an appropriate two-speed shock absorber (37) secured obliquely to the base with one end secured to the fixed base of the seat at (39) and with the other end secured to the movable frame of said seat at (41); said shock absorber being capable of being moved into a "soft" or a "hard" position by means of an appropriate handwheel (47) acting from the outside of the seat on the piston rod (43) of said shock absorber (37); and in that said base is adapted to be converted into a rigid base by means of an appropriate lever (51) for locking the vertical movement of the seat.

2. Base for seats of truck vehicles and the like according to claim 1, characterized in that the device with inclined planes for loading the springs (19) is substantially constituted by a cone-shaped element (31) movable transversely relative to the upper frame (27) of the seat, with the inclined plane (25) directed towards the inclined plane (29) of another cone-shaped element (33) firmly secured to the movable counter frame (23) of said seat; the relative movement of said two cone-shaped elements (31,33), i.e. the relative transverse movement of the two inclined planes (27, 29) contacting each other, producing shifting of the movable counter frame (23) in a perpendicular direction relative to the connection arm (17) of the guideways (14) and consequently pre-loading of the helical springs (19) producing the desired degree of springing thereof.

3. Base for seats of truck vehicles and the like according to claims 1 and 2, characterized in that the device for adjustment of the position of the shock absorber (37) into the "soft" or "hard" position substantially is a handwheel (47) which through a rod (45) extending up to the piston rod (43) of the shock absorber (37) adjusts the relative position thereof with respect to the cylinder, placing said piston rod in one or the other position.

4. Base for seats of truck vehicles and the like according to a mechanical equivalent of claim 1, characterized in that the helical springs (19) for pre - loading the movable plate of the seat may be placed in the rear instead of in the front, without thereby changing in any way the inventive concept of the invention.

FIG.1

FIG. 2

FIG. 3